(19) Europäisches Patentamt
European Patent Office
Office européen des brevets

(11) EP 3 248 862 A1

(12) EUROPÄISCHE PATENTANMELDUNG

(43) Veröffentlichungstag:
29.11.2017 Patentblatt 2017/48

(51) Int Cl.:
B63H 25/36 (2006.01)  G05D 1/00 (2006.01)
G08B 9/06 (2006.01)

(21) Anmeldenummer: 17172863.7

(22) Anmeldetag: 24.05.2017

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(30) Priorität: 27.05.2016  DE 102016109821

(71) Anmelder: Raytheon Anschütz GmbH
24106 Kiel (DE)

(72) Erfinder:
• Schwab, Hendrik
  24119 Kronshagen (DE)
• Beyer, Marc-André
  24159 Kiel (DE)
• Mangold, Ulrich
  24116 Kiel (DE)

(74) Vertreter: Eisenführ Speiser
Patentanwälte Rechtsanwälte PartGmbB
Johannes-Brahms-Platz 1
20355 Hamburg (DE)

(54) **VORRICHTUNG UND VERFAHREN ZUR FEHLERÜBERWACHUNG DES RUDERS EINES WASSERFAHRZEUGES**

(57) Die Erfindung beschreibt eine Vorrichtung und ein Verfahren zur Fehlerüberwachung des Ruders eines Wasserfahrzeuges, wobei in Abhängigkeit von einem vorgegebenen Soll-Ruderwinkel (2) mithilfe eines Rudermodells das Verhalten des Ruders nachgebildet und daraus ein geschätzter Ist-Ruderwinkel (10) erzeugt wird, in Abhängigkeit von dem aktuellen Ist-Ruderwinkel (4) und dem geschätzten Ist-Ruderwinkel (10) ein Residuum (14) erzeugt wird, das eine Differenz zwischen dem aktuellen Ist-Ruderwinkel (4) und dem geschätzten Ist-Ruderwinkel (10) repräsentiert, und das Residuum (14) mithilfe eines Algorithmus verarbeitet und daraus ein Ausgangssignal (6) erzeugt wird, das in Abhängigkeit vom Ergebnis der Verarbeitung angibt, ob eine Störung des Ruders vorliegt oder nicht.

Fig. 1

EP 3 248 862 A1

**Beschreibung**

Die Erfindung betrifft eine Vorrichtung und ein Verfahren zur Fehlerüberwachung des Ruders eines Wasserfahrzeuges.

Bei herkömmlichen Vorrichtungen und Verfahren der eingangs genannten Art werden zum Erkennen von Ruderklemmern die Differenz von Soll-Ruderwinkel und Ist-Ruderwinkel beobachtet, wobei der Ruderwinkel als Winkel zwischen der Längsachse des Wasserfahrzeuges und dem Ruderblatt definiert ist, sowie die Bewegungsrichtung überwacht.

Als Nachteil der vorbekannten Lösungen haben sich eine langsame Fehlererkennung eines Ruderklemmers, eine verzögerte Auslösung des Alarms und eine Anfälligkeit für Fehlalarme herausgestellt.

Bei einer aus der EP 0 576 815 B1 bekannt gewordenen Vorrichtung für den Einsatz in der Luftfahrt wird mithilfe eines in der Antriebskinematik für Auftriebsklappen angeordneten Indikatorelementes ein Verklemmen erkannt und verhindert.

Bei einem in der DE 103 53 672 A1 vorgeschlagenen Verfahren werden an Komponenten des Antriebssystems für Landeklappen eines Flugzeugs Zustandskenngrößen erfasst und an eine Kontrolleinheit übermittelt. Diese Kontrolleinheit wertet die Zustandskenngrößen mittels eines Algorithmus zur Fehlererkennung aus und initialisiert im Fehlerfall ein kontrolliertes Abriegeln der Antriebseinheit, wodurch eine fehlerbedingte Überlastung in Folge von Klemmfällen begrenzt wird.

Es ist Aufgabe der vorliegenden Erfindung, eine robustere und schnellere Erkennung von Ruderfehlern und insbesondere Ruderklemmern zu realisieren und dabei auch eine Senkung der Fehleralarme anzustreben.

Diese Aufgabe wird gemäß einem ersten Aspekt der Erfindung gelöst mit einer Vorrichtung zur Fehlerüberwachung des Ruders eines Wasserfahrzeuges mit

- einer Rudermodelleinrichtung, die als Eingangsgröße einen vorgegebenen Soll-Ruderwinkel verwendet, in Abhängigkeit von dem Soll-Ruderwinkel das Verhalten des Ruders nachbildet und daraus einen geschätzten Ist-Ruderwinkel erzeugt,

- einem Residuengenerator, der als Eingangsgrößen den aktuellen Ist-Ruderwinkel und den geschätzten Ist-Ruderwinkel verwendet und in Abhängigkeit von diesen Eingangsgrößen ein Residuum bereitstellt, das eine Differenz zwischen dem aktuellen Ist-Ruderwinkel und dem geschätzten Ist-Ruderwinkel repräsentiert, und

- einer Auswerteeinheit die als Eingangsgröße das Residuum verwendet, mithilfe eines Algorithmus das Residuum verarbeitet und daraus ein Ausgangssignal erzeugt, das in Abhängigkeit vom Ergebnis der Verarbeitung angibt, ob eine Störung des Ruders vorliegt oder nicht.

Des weiteren wird die vorgenannte Aufgabe gemäß einem zweiten Aspekt der vorliegenden Erfindung gelöst mit einem Verfahren zur Fehlerüberwachung des Ruders eines Wasserfahrzeuges mit den Schritten,

- in Abhängigkeit von einem vorgegebenen Soll-Ruderwinkel mithilfe eines Rudermodells das Verhalten des Ruders nachzubilden und daraus einen angenommenen Ist-Ruderwinkel zu erzeugen,

- in Abhängigkeit von dem aktuellen Ist-Ruderwinkel und dem geschätzten Ist-Ruderwinkel ein Residuum zu erzeugen, das eine Differenz zwischen dem aktuellen Ist-Ruderwinkel und dem geschätzten ist-Ruderwinkel repräsentiert, und

- das Residuum mithilfe eines Algorithmus zu verarbeiten und daraus ein Ausgangsignal zu erzeugen, das in Abhängigkeit vom Ergebnis der Verarbeitung angibt, ob eine Störung des Ruders vorliegt oder nicht.

Die Erfindung zeichnet sich durch die Verwendung eines Rudermodells in Kombination mit der Erzeugung eines Residuums aus. Mithilfe des Rudermodells, das einen bestimmten Algorithmus aufweist, wird in Abhängigkeit von einem vorgegebenen Soll-Ruderwinkel das Verhalten des Ruders nachgebildet und daraus ein geschätzter Ist-Ruderwinkel ermittelt und mithilfe eines Residuengenerators in Abhängigkeit von diesem geschätzten Ist-Ruderwinkel und dem aktuellen Ist-Ruderwinkel ein Residuum erzeugt, das als Indikator für einen Ruderfehler verwendet wird. Mit einer solchen Lösung lassen sich Ruderfehler robuster und schneller erkennen und die Anzahl von Fehlalarmen senken. Als Vorteile der Erfindung lassen sich Ruderklemmer nach kürzester Zeit sicher erkennen, wird die Rudermaschinen-Dynamik besser berücksichtigt und die Fehlalarmquote verringert und somit verbessert. Die Erfindung ist robust gegen Rauschen der Sensorik und beinhaltet ein einfacheres Konzept der Erkennungslogik. Die Erfindung kann beispielsweise in Steuerständen und Autopiloten von Wasserfahrzeugen implementiert sein.

Bevorzugte Ausführungen und Weiterbildungen der Erfindung sind in den abhängigen Ansprüchen angegeben.

So wird bevorzugt als Rudermodell zur Nachbildung des Verhaltens einer Rudermaschine ein Tiefpass erster Ordnung angenommen.

Bei einer weiteren bevorzugten Ausführung der Erfindung weist die Auswerteeinheit eine Parameterschätzeinrichtung auf, in der mithilfe des das Residuum verarbeitenden Algorithmus ein eine Störung des Ruders beschreibender, geschätzter Parameter erzeugt wird, wobei das Ausgangssignal in Abhängigkeit von vorbestimmten Eigenschaften des geschätzten Parameters angibt, ob eine Störung des Ruders vorliegt oder nicht. Bei einer Weiterbildung dieser Ausführung lässt sich über partielle Ableitungen der die Störung beschreibende Parameter schätzen. Dabei kann eine Eigenschaft des geschätzten Parameters darin bestehen, dass der Parameter während eines bestimmten, vorzugsweise einstellbaren, Zeitraums innerhalb eines bestimmten, vorzugsweise konfigurierbaren, Erkennungsbereiches liegt und diese Eigenschaft dazu verwendet werden, das eine Störung des Ruders angebende Ausgangssignal zu erzeugen.

Als Alternative oder zusätzlicher Indikator kann bevorzugt der Mittelwert des Residuums auf Sprünge mithilfe eines Maximum-Likelihood-Verfahrens untersucht werden, wobei das Ausgangssignal dann eine Störung des Ruders angibt, wenn ein Sprung erkannt wird, der einen vorbestimmten Schwellwert überschreitet, und zwar bevorzugt nach Ablauf eines bestimmten vorzugsweise einstellbaren, Zeitintervalls, nachdem der Sprung den vorbestimmten Schwellwert überschritten hat.

Nachfolgend wird ein bevorzugtes Ausführungsbeispiel der Erfindung anhand der beiliegenden Figuren näher erläutert. Es zeigen:

Figur 1    ein schematisches Blockschaltbild einer Fehlerüberwachungsvorrichtung für eine Rudermaschine eines Schiffes gemäß einem bevorzugten Ausführungsbeispiel; und

Figur 2    ein Zustands- und Ablaufdiagramm für eine in der Fehlerüberwachungsvorrichtung gemäß Fig. 1 vorgesehenen Auswertelogik zur Erkennung eines Ruderklemmers.

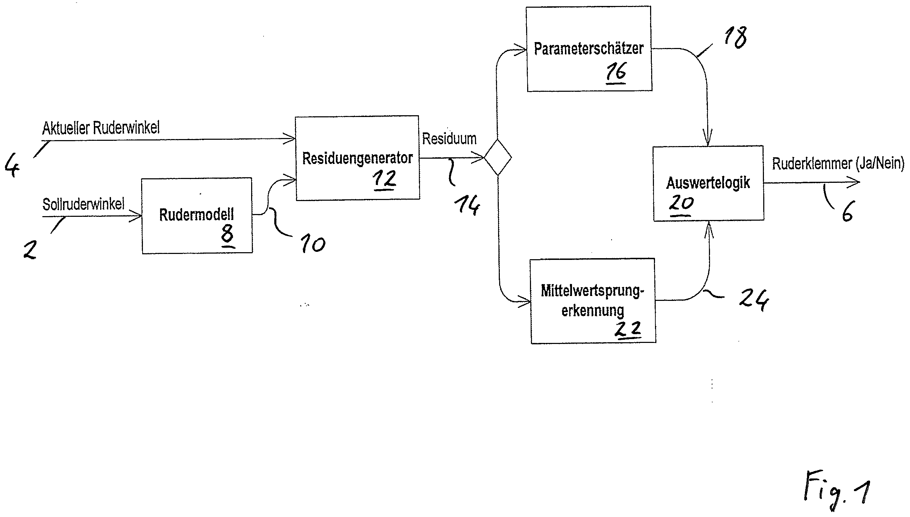

Für die in Figur 1 gezeigte Fehlerüberwachungsvorrichtung werden als Eingangsgrößen ein Soll-Ruderwinkel 2 und ein aktueller Ist-Ruderwinkel 4 verwendet. Der Soll-Ruderwinkel 2 wird vorgegeben, und zwar in der Regel von der Brücke des Schiffes über eine hierfür vorgesehene nicht dargestellte Eingabeeinrichtung, die insbesondere als Steuerrad oder Joystick ausgebildet ist und den vorgegebenen Soll-Ruderwinkel 2 in Form von elektrischen Daten zur Verfügung stellt. Der aktuelle Ist-Ruderwinkel 4 wird dagegen von einem Ruderwinkelsensor erzeugt, der die Winkelstellung des Ruders gegenüber der Schiffslängsachse misst und ebenfalls elektrische Daten zur Verfügung stellt. Als Ausgangssignal 6 erzeugt die Vorrichtung ein Signal, das anzeigt, ob mit zumindest hoher Wahrscheinlichkeit ein Ruderfehler und insbesondere ein Ruderklemmer vorliegt oder nicht.

Für das Verhalten der im Übrigen in Figur 1 ebenfalls nicht dargestellten Rudermaschine wird ein Modell zugrundelegt, das in einem Rudermodellmodul 8 implementiert ist. In Abhängigkeit von dem eingegebenen Soll-Ruderwinkel 2 erzeugt das Rudermodellmodul 8 aufgrund des Modells einen geschätzten Ist-Ruderwinkel 10.

Bevorzugt wird als Modell für die Rudermaschine wird ein Tiefpass erster Ordnung verwendet:

$$\dot{x} = -\frac{1}{T_p} \cdot x + \frac{1}{T_p} \cdot u \qquad\qquad (1)$$

$$y = x \qquad\qquad (2)$$

Hierbei ist x der in Figur 1 mit dem Bezugszeichen "10" bezeichnete geschätzte Ist-Ruderwinkel, u der in der Figur mit dem Bezugszeichen "2" bezeichnete vorgegebene Sollruderwinkel und $T_p$ eine Zeitkonstante des Models.

Unter der Anwendung der La-Place-Transformation ergibt sich dann im Bildbereich:

$$y(s) \;=\; M^*(s) \cdot u(s) \qquad\qquad (3)$$

mit der Übertragungsfunktion

$$M^*(s) = \frac{G^*(s)}{H^*(s)} \qquad\qquad (4)$$

wobei

$$G^*(s) = \frac{1}{T_p} \qquad (5)$$

$$H^*(s) = s - \frac{1}{T_p} \qquad (6)$$

Da ein plötzlich feststehendes Ruder festgestellt werden soll, ist es notwendig diesen Zustand modelltechnisch zu erfassen. Ein feststehendes Ruder wird charakterisiert durch:

$$\dot{x} = 0 \text{ unter der Bedingung } x, u \neq 0 \qquad (7)$$

Um den Zustand eines feststehenden Ruders in das Modell zu integrieren wird, dieses Modell um eine Variable e erweitert:

$$\dot{x} = -\frac{1-e}{T_p} \cdot x + \frac{1-e}{T_p} \cdot u \qquad (8)$$

$$y = x \qquad (9)$$

Daraus ergibt sich die Übertragungsfunktion:

$$M(s) = \frac{G(s)}{H(s)} \qquad (10)$$

wobei

$$G(s) = \frac{1-e}{Tp} \qquad (11)$$

$$H(s) = s - \frac{1-e}{Tp} \qquad (12)$$

Wie Figur 1 ferner erkennen lässt, weist die Vorrichtung einen Residiumzgenerator 12 auf, der als Eingangsgrößen den aktuellen Ist-Ruderwinkel 4 und den vom Rudermodellmodul 8 erzeugten geschätzten Ist-Ruderwinkel 10 verwendet und ein Residuum 14 erzeugt, das die Differenz zwischen dem gemessenen aktuellen Ist-Ruderwinkel 4 und dem vom Rudermodellmodul 8 zur Verfügung gestellten geschätzten Ist-Ruderwinkel 10 repräsentiert.

Im Residuumgenerator 12 wird bevorzugt die Übertragungsfunktion M(s) des erweiterten Modells, das durch die Gleichungen (8) bis (12) repräsentiert wird, in einen fehlerfreien Teil M*, der durch die Gleichungen (1) bis (6) repräsentiert wird, und einen fehlerbehafteten Teil δM aufgeteilt:

$$y(s) = M^*(s) \cdot u(s) + \delta M \cdot u(s) \qquad (13)$$

Aus dieser Darstellung lässt sich ableiten, dass der in Figur 1 mit dem Bezugszeichen "4" bezeichnete aktuelle Ruderwinkel auf der Summe aus ungestörtem Modell und gestörtem Modell basieren sollte.

Unter Verwendung der Variablen e ergeben sich dann folgende Zusammenhänge:

$$M(s,e) = M^*(s) + \delta M(s) \qquad (14)$$

$$e_{true} = e_{actual} + e_\delta \qquad (15)$$

$$\delta M(s) = \frac{\delta M(s,e)}{\delta e} \cdot e \qquad (16)$$

Die Residuen können wie folgt ausgedrückt werden:

$$H(s) \cdot y(s) = G(s) \cdot u(s) \qquad (17)$$

$$(H(s) + \delta H(s) \cdot y(s) = \big(G(s) + \delta G(s)\big) \cdot u(s) \qquad (18)$$

$$o^* = H(s) \cdot y(s) + G(s) \cdot y(s) \qquad (19)$$

$$= \delta G(s) \cdot u(s) - \delta H(s) \cdot y(s) \qquad (20)$$

$$\delta G(s) = \frac{\delta G(s,e)}{\delta e} \cdot e \qquad (21)$$

$$\delta H(s) = \frac{\delta H(s,e)}{\delta e} \cdot e \qquad (22)$$

Betrachtet man nun das in Figur 1 mit dem Bezugszeichen "14" bezeichnete Residuum aus dem tatsächlich gemessenen und in der Figur mit dem Bezugszeichen "4" bezeichneten aktuellen Ruderwinkel und dem mit dem ungestörtem Modell geschätzten und in Figur 1 mit dem Bezugszeichen "10" bezeichneten Ist-Ruderwinkel und betrachtet den Zusammenhang zwischen diesem Residuum o* und dem fehlerhaften Teil, so ergibt sich der Zusammenhang

$$o^* = |\delta G(s) \cdot u(s) - \delta H(s) \cdot y(s)| \cdot e, \qquad (23)$$

wobei es sich bei "o*" um das in der Figur mit dem Bezugszeichen "14" bezeichnete Residium handelt.

Ferner weist die Vorrichtung eine Auswerteeinrichtung auf, die das Residuum 14 verarbeitet und das erwähnte Ausgangssignal 6 erzeugt. Im dargestellten Ausführungsbeispiel weist die Auswerteeinrichtung ein Parameterschätzungsmodul 16, eine Auswertelogik 20 und ein Mittelwertsprungerkennungsmodul 22 auf.

Im Parameterschätzungsmodul 16 wird über partielle Ableitungen des Residuums 14 ein Parameter erzeugt, der die Störung beschreibt und als Parametersignal 18 ausgegeben wird. Insbesondere durch Auflösen der Gleichung (23) nach der Variable e lässt sich die Variable e als Parameter aus dem Residuum o* unter der Annahme des zuvor beschriebenen störungsbehafteten Modells bestimmen. Aus den Gleichungen des Modells mit Störung lässt sich erkennen, dass von einem Fehler oder einer Störung in Form eines möglichen Ruderklemmers auszugehen ist, wenn der auf Basis des Residums o* geschätzte Parameter e = 1 ist; mit anderen Worten charakterisiert e = 1 somit einen Ruderklemmer. Insbesondere aus praktischen Erwägungen wird ein solcher Fehler auch dann angenommen, wenn der Parameter e innerhalb eines konfigurierbaren Erkennungsbereiches liegt, der vorzugsweise 0,9 bis 1,1 ist. Das Parametersignal 18 und der dadurch repräsentierte Parameter wird in die Auswertelogik 20 eingelesen, die dann auf einen Fehler erkennt, wenn dieser Parameter für eine einstellbare Zeit innerhalb des Erkennungsbereiches liegt.

Als zusätzlicher Indikator wird zur Erhöhung der Robustheit im dargestellten Ausführungsbeispiel im Mittelwertsprungerkennungsmodul 22 der Mittelwert des Residuums 14 auf Sprünge mithilfe eines Maximum-Likelihood-Verfahrens untersucht. Hierzu wird die Hypothese überprüft, ob die Differenz zwischen dem aktuellen Ruderwinkel 4 und dem mit Hilfe des Modells geschätzten Ist-Ruderwinkel 10 einen Mittelwert von 0 aufweist, so lange das Ruder nicht klemmt. Tritt ein Klemmer auf, verändert sich dieser Mittelwert und wird dieses vom Mittelwertsprungerkennungsmodul 22 festgestellt. Dabei erzeugt das Mittelwertsprungerkennungsmodul 22 ein Signal 24, das den ermittelten Sprung oder die ermittelten Sprünge entsprechend repräsentiert und ebenfalls an die Auswertelogik 20 übermittelt wird. Erkennt die Auswertelogik 20 einen Sprung mit ausreichender Höhe, so wird nach einer einstellbaren Zeit ein Fehler ausgelöst.

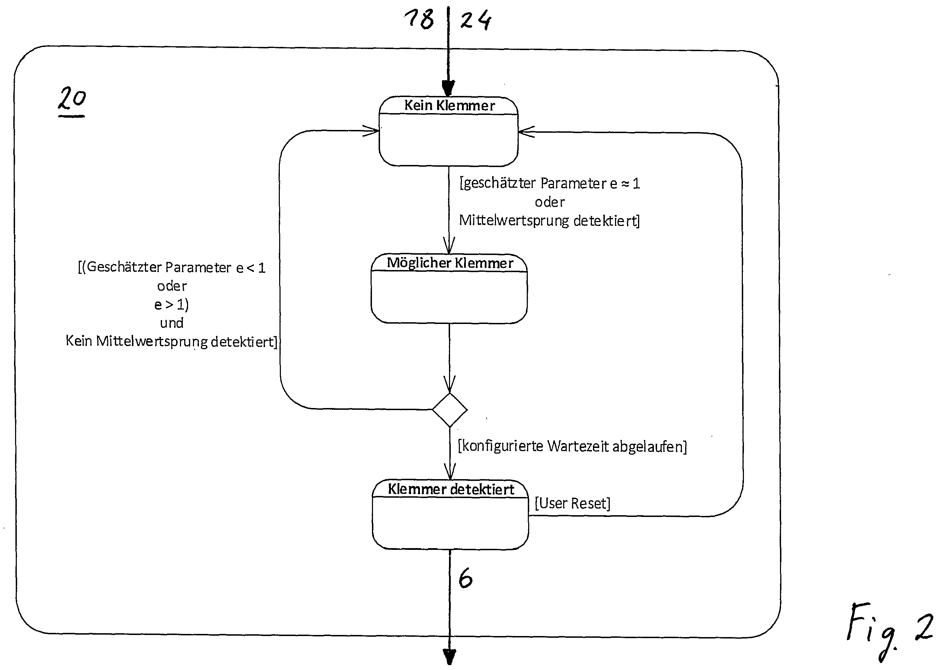

Die Auswertung des Ergebnisses des Parameterschätzungsmoduls 16 (in Form des in Figur 1 gezeigten Parametersignals 18) und des Ergebnisses des Mittelwertsprungerkennungsmoduls 22 (in Form des in Fig. 1 gezeigten Signals 24) in der Auswertelogik 20 ist schematisch als Zustands- und Ablaufdiagramm in Fig. 2 dargestellt. Zunächst wird davon ausgegangen, dass ein Ruderklemmer nicht vorhanden ist. Liegt ausweislich des Parametersignals 18 der Parameter e bei etwa 1 bzw. innerhalb des zuvor als bevorzugt angegebenen Erkennungsbereiches zwischen 0,9 und 1,1 oder lässt das Signal 24 vom Mittelwertsprungmoduls 22 einen Mittelwertsprung erkennen, so wird zunächst von einem möglichen Ruderklemmer ausgegangen, indem der Zustand gemäß Figur 2 von "Kein Klemmer" in "Möglicher Klemmer" wechselt. Bleibt innerhalb eines anschließenden vorbestimmten Zeitintervalls der Zustand, also der Parameter e innerhalb des Erkennungsbereiches oder die Feststellung eines Mittelwertsprunges, unverändert, gilt dies als Bestätigung des Ruderklemmers, so dass der vorläufige Zustand "Möglicher Klemmer" in einen endgültigen Zustand "Klemmer detektiert" wechselt. Verlässt dagegen innerhalb dieses vorbestimmten Zeitintervalls, das auch als Wartezeit zu bezeichnen ist, der Parameter e den Erkennungsbereich, unterschreitet also sein Wert die Untergrenze oder überschreitet sein Wert die Obergrenze und wird die Mittelwertsprungerkennung zurückgenommen, also ein Mittelwertsprung nicht mehr festgestellt, so ist dies ein Zeichen dafür, dass ein möglicher Ruderklemmer doch nicht vorliegt, so dass der Zustand von "Möglicher Klemmer" wieder in den Ausgangszustand "Kein Klemmer" zurückgesetzt wird.

Demnach reicht es im beschriebenen Ausführungsbeispiel aus, wenn entweder der Parameter e innerhalb des Erkennungsbereiches 1 liegt oder ein Mittelwertsprung ermittelt wird, um dann nach Ablauf der vorbestimmten Wartezeit das Vorliegen eines Ruderklemmers festzustellen. Somit werden im beschriebenen Ausführungsbeispiel die beiden Größen Parameter "e" und "Mittelwertsprung" alternativ als Erkennungsmerkmal verwendet, um einen Zustandswechsel auszulösen, sofern nicht innerhalb der Wartezeit sowohl der Parameter "e" wieder außerhalb des Erkennungsbereiches liegt und gleichzeitig keine Mittelwertsprungerkennung erkannt wird. Alternativ ist es aber auch grundsätzlich denkbar, den Zustandswechsel nur dann auszulösen, wenn gleichzeitig sowohl der Parameter "e" innerhalb des Erkennungsbereiches liegt als auch ein Mittelwertsprung erkannt wird.

An dieser Stelle sei noch angemerkt, dass für den Erkennungsbereich für den Parameter e als Grenzwerte auch grundsätzlich andere Werte als 0,9 und 1,1 in Frage kommen können, sofern weiterhin die sichere Annahme eines Ruderklemmers gewährleistet bleibt. So ist es beispielsweise denkbar, den Erkennungsbereich zwischen 0,95 und 1,05 oder beispielsweise auch zwischen 0,8 und 1,2 festzulegen. Ebenfalls wäre es grundsätzlich denkbar, auf einen Bereich zu verzichten und nur exakt e = 1 als Bedingung für den Zustandswechsel vorzusehen.

Durch die gemeinsame Verwendung des Parameterschätzungsmoduls 16 und des Mittelwertsprungerkennnungsmoduls 22 im dargestellten Ausführungsbeispiel und somit der mit diesen beiden Modulen durchgeführten Verfahren lässt sich die Geschwindigkeit der Erkennung und die Robustheit gegen Messrauschen erhöhen.

In Abhängigkeit davon, ob in der Auswertelogik 20 auf einen Fehler (Ruderklemmer) erkannt wird oder nicht, gibt das von der Auswertelogik 20 erzeugte Ausgangssignal 6 also an, ob ein Fehler (Ruderklemmer) vorliegt oder nicht. Somit enthält das Ausgangssignal 6 einen Parameter, der einen ersten Zustand oder einen zweiten Zustand einnimmt, oder nimmt das Ausgangssignal 6 selbst einen ersten Zustand oder einen zweiten Zustand ein, wobei der erste Zustand eine fehlerfreie Situation und der zweite Zustand das Vorhandensein eines Ruderklemmers angibt.

**Patentansprüche**

1. Vorrichtung zur Fehlerüberwachung des Ruders eines Wasserfahrzeuges mit

   - einer Rudermodelleinrichtung (8), die als Eingangsgröße einen vorgegebenen Soll-Ruderwinkel (2) verwendet, in Abhängigkeit von dem Soll-Ruderwinkel das Verhalten des Ruders nachbildet und daraus einen geschätzten Ist-Ruderwinkel (10) erzeugt,
   - einem Residuengenerator (12), der als Eingangsgrößen den aktuellen Ist-Ruderwinkel (4) und den geschätzten Ist-Ruderwinkel (10) verwendet und in Abhängigkeit von diesen Eingangsgrößen ein Residuum (14) bereitstellt, das eine Differenz zwischen dem aktuellen Ist-Ruderwinkel (4) und dem geschätzten Ist-Ruderwinkel (10) repräsentiert, und
   - einer Auswerteeinheit (16, 20, 22), die als Eingangsgröße das Residuum (14) verwendet, mithilfe eines Algorithmus das Residuum (14) verarbeitet und daraus ein Ausgangssignal (6) erzeugt, das in Abhängigkeit vom Ergebnis der Verarbeitung angibt, ob eine Störung des Ruders vorliegt oder nicht.

2. Vorrichtung nach Anspruch 1, bei welchem die Rudermodelleinrichtung (8) einen Tiefpass, insbesondere einen Tiefpass erster Ordnung, aufweist.

3. Vorrichtung nach Anspruch 1 oder 2, bei welcher die Auswerteeinheit eine Parameterschätzeinrichtung (16) aufweist, die mithilfe des Algorithmus einen eine Störung des Ruders beschreibenden, geschätzten Parameter (18) erzeugt, wobei das Ausgangssignal (6) in Abhängigkeit von vorbestimmten Eigenschaften des geschätzten Parameters (18) angibt, ob eine Störung des Ruders vorliegt oder nicht.

4. Vorrichtung nach Anspruch 3, bei welcher der Algorithmus Schritte zur partiellen Ableitung des Residuums (14) aufweist.

5. Vorrichtung nach Anspruch 3 oder 4, bei welcher eine Eigenschaft des geschätzten Parameters (18) darin besteht, dass der Parameter (18) während eines bestimmten, vorzugsweise einstellbaren, Zeitraums innerhalb eines bestimmten, vorzugsweise konfigurierbaren, Erkennungsbereiches liegt, und diese Eigenschaft dazu verwendet wird, das eine Störung des Ruders angebende Ausgangssignal (6) zu erzeugen.

6. Vorrichtung nach mindestens einem der vorangegangenen Ansprüche, bei welcher der Algorithmus Schritte zur Untersuchung eines Mittelwertes des Residuums (14) auf Sprünge mithilfe eines Maximum-Likelihood-Verfahrens aufweist, wobei das Ausgangssignal (6) eine Störung des Ruders angibt, wenn ein Sprung erkannt wird, der einen vorbestimmten Schwellwert überschreitet.

7. Vorrichtung nach Anspruch 6, bei welcher die Auswerteeinheit (20, 22) das eine Störung des Ruders angebende Ausgangssignal (6) nach Ablauf eines bestimmten, vorzugsweise einstellbaren, Zeitintervalls erzeugt, nachdem der Sprung den vorbestimmten Schwellwert überschritten hat.

8. Verfahren zur Fehlerüberwachung des Ruders eines Wasserfahrzeuges mit den Schritten,

    - in Abhängigkeit von einem vorgegebenen Soll-Ruderwinkel mithilfe eines Rudermodells das Verhalten des Ruders nachzubilden und daraus einen angenommenen Ist-Ruderwinkel zu erzeugen,
    - in Abhängigkeit von dem aktuellen Ist-Ruderwinkel (4) und dem geschätzten Ist-Ruderwinkel (10) ein Residuum (14) zu erzeugen, das eine Differenz zwischen dem aktuellen Ist-Ruderwinkel (4) und dem geschätzten ist-Ruderwinkel (10) repräsentiert, und
    - das Residuum (14) mithilfe eines Algorithmus zu verarbeiten und daraus ein Ausgangsignal (6) zu erzeugen, das in Abhängigkeit vom Ergebnis der Verarbeitung angibt, ob eine Störung des Ruders vorliegt oder nicht.

9. Verfahren nach Anspruch 8, bei welchem als Rudermodell ein Tiefpass, insbesondere ein Tiefpass erster Ordnung, verwendet wird.

10. Verfahren nach Anspruch 8 oder 9, bei welchem mithilfe des Algorithmus ein eine Störung des Ruders beschreibender, geschätzter Parameter (18) erzeugt wird und das Ausgangssignal (6) in Abhängigkeit von vorbestimmten Eigenschaften des geschätzten Parameters (18) angibt, ob eine Störung des Ruders vorliegt oder nicht.

11. Verfahren nach Anspruch 10, bei welcher der Algorithmus Schritte zur partiellen Ableitung des Residuums (14) aufweist.

12. Verfahren nach Anspruch 10 oder 11, bei welcher eine Eigenschaft des geschätzten Parameters (18) darin besteht, dass der Parameter (18) während eines bestimmten, vorzugsweise einstellbaren, Zeitraums innerhalb eines bestimmten, vorzugsweise konfigurierbaren, Erkennungsbereiches liegt, und diese Eigenschaft dazu verwendet wird, ein eine Störung des Ruders angebendes Ausgangssignal (6) zu erzeugen.

13. Verfahren nach mindestens einem der Ansprüche 8 bis 12, bei welcher der Algorithmus Schritte zur Untersuchung eines Mittelwertes des Residuums (14) auf Sprünge mithilfe eines Maximum-Likelihood-Verfahrens aufweist, wobei das Ausgangsignal (6) eine Störung des Ruders angibt, wenn ein Sprung erkannt wird, der eine vorbestimmte Größe überschreitet.

14. Verfahren nach Anspruch 13, bei welcher das eine Störung des Ruders angebende Ausgangssignal (6) nach Ablauf eines bestimmten, vorzugsweise einstellbaren, Zeitintervalls erzeugt wird, nachdem der Sprung den vorbestimmten Schwellwert überschritten hat.

Ruderklemmer (Ja/Nein)

18

Parameterschätzer 16

Auswertelogik 20

24

Mittelwertsprung-erkennung 22

Residuum

Residuengenerator 12

14

Aktueller Ruderwinkel

Sollruderwinkel

Rudermodell 8

10

4

2

Fig. 1

EP 3 248 862 A1

18 | 24

20

Kein Klemmer

[geschätzter Parameter e ≈ 1
oder
Mittelwertsprung detektiert]

Möglicher Klemmer

[(Geschätzter Parameter e < 1
oder
e > 1)
und
Kein Mittelwertsprung detektiert]

[konfigurierte Wartezeit abgelaufen]

Klemmer detektiert [User Reset]

6

Fig. 2

**Europäisches Patentamt**
**European Patent Office**
**Office européen des brevets**

# EUROPÄISCHER RECHERCHENBERICHT

Nummer der Anmeldung

EP 17 17 2863

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 081 951 A (SPERRY CORP) 24. Februar 1982 (1982-02-24) * Ansprüche; Abbildungen * ----- | 1-14 | INV. B63H25/36 G05D1/00 G08B9/06 |
| X | DE 27 24 990 A1 (SPERRY RAND CORP) 15. Dezember 1977 (1977-12-15) * Ansprüche; Abbildungen * ----- | 1,8 | |
| A | EP 1 715 352 A2 (IAV GMBH [DE]) 25. Oktober 2006 (2006-10-25) * Ansprüche; Abbildungen * ----- | 1-14 | |

**RECHERCHIERTE SACHGEBIETE (IPC)**

B63H
G05D
G08B

Der vorliegende Recherchenbericht wurde für alle Patentansprüche erstellt

| Recherchenort | Abschlußdatum der Recherche | Prüfer |
|---|---|---|
| Den Haag | 2. Oktober 2017 | Knoflacher, Nikolaus |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 17 2863

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-10-2017

| Im Recherchenbericht angeführtes Patentdokument | | Datum der Veröffentlichung | Mitglied(er) der Patentfamilie | | Datum der Veröffentlichung |
|---|---|---|---|---|---|
| GB 2081951 | A | 24-02-1982 | DE | 3130713 A1 | 08-04-1982 |
| | | | GB | 2081951 A | 24-02-1982 |
| | | | JP | S5737098 A | 01-03-1982 |
| | | | NL | 8103500 A | 01-03-1982 |
| | | | NO | 812714 A | 12-02-1982 |
| | | | US | 4342274 A | 03-08-1982 |
| DE 2724990 | A1 | 15-12-1977 | CA | 1089987 A | 18-11-1980 |
| | | | DE | 2724990 A1 | 15-12-1977 |
| | | | DK | 244477 A | 05-12-1977 |
| | | | ES | 459481 A1 | 16-04-1978 |
| | | | FR | 2353437 A1 | 30-12-1977 |
| | | | GB | 1532344 A | 15-11-1978 |
| | | | IT | 1078895 B | 08-05-1985 |
| | | | JP | S52149797 A | 13-12-1977 |
| | | | NL | 7706074 A | 06-12-1977 |
| | | | NO | 771955 A | 06-12-1977 |
| | | | SE | 416458 B | 05-01-1981 |
| | | | US | 4055135 A | 25-10-1977 |
| EP 1715352 | A2 | 25-10-2006 | DE | 102005018980 A1 | 02-11-2006 |
| | | | EP | 1715352 A2 | 25-10-2006 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0576815 B1
- DE 10353672 A1